Europäisches Patentamt

(19) European Patent Office

Office européen des brevets

(11) Publication number: **0 241 656**
**B1**

(12) EUROPEAN PATENT SPECIFICATION

(45) Date of publication of the patent specification:
25.04.90

(21) Application number: **87101628.3**

(22) Date of filing: **06.02.87**

(51) Int. Cl.⁴: **F16L 33/22, F16L 19/08**

(54) Joint for a hose or tube.

(30) Priority: **07.02.86 JP 16555/86**

(43) Date of publication of application:
**21.10.87 Bulletin 87/43**

(45) Publication of the grant of the patent:
**25.04.90 Bulletin 90/17**

(84) Designated Contracting States:
**DE FR GB**

(56) References cited:
**AT-B- 357 386**
**AT-B- 373 677**
**GB-A- 2 126 299**
**US-A- 2 479 483**
**US-A- 3 834 743**
**US-A- 4 314 718**

(73) Proprietor: **IHARA KOATSU TSUGITE KOGYO
KABUSHIKI KAISHA, 17-20, Shinbashi 6-chome,
Minato-ku Tokyo-to(JP)**

(72) Inventor: **Tsuchiya, Yoshiki Ihara Koatsu Tsugite Kogyo
K.K., 17-20, Shinbashi 6-chome, Minato-ku Tokyo-To(JP)**

(74) Representative: **Liedl, Gerhard,
Steinsdorfstrasse 21 - 22, D-8000 München 22(DE)**

## Description

This invention relates to a joint for coupling a hose or tube with a transmission line for a high pressure fluid such as oil, water or gas.

A known joint of this kind consists of a main body and a socket. The main body has a screw thread at one end for connection with an inlet or outlet for a pressure fluid on a machine, a tapering insert portion at the other end for smooth insertion into a hose or tube, an intermediate hexagonal nut portion, and a bore passing through the main body in axial direction. The base of the tubular insert portion adjacent to the hexagonal nut portion is provided with an outer screw thread adapted to mesh with the end portion of an inner screw thread of the tubular socket.

The end of the hose or tube is first screwed into one end of the socket which is held by a vice. Then the tubular insert portion is inserted into the hose or tube from the other end of the socket, an assembly mandrel being passed through the bore of the main body, and the hexagonal nut portion is rotated with a spanner to screw the base of the insert portion into the end of the socket to grip the hose or tube between the threaded inner surface of the socket and the outer tapered surface of the insert portion. The assembly mandrel is then withdrawn.

Thus, the fastening of the hose or tube involves troublesome steps, and a vice and an assembly mandrel are needed. When the hose or tube is screwed into the socket, the outer surface of the hose or tube is damaged, so that pressure resistance is impaired. Furthermore, because a vice and a mandrel are required, the hose or tube cannot be directly connected to the main body when the main body is fastened to a machine.

A joint for coupling a hose or tube with a transmission line having the features of the prior art portion of the patent claim is described in the document US-A 2 479 483. The end of the hose or tube is inserted through the opening at the end of the socket remote from the screw threads and the hose or tube is passed through the spacer and press rings. Next the insert cylinder is inserted into the end of the hose or tube. The socket is then screwed onto the main body, when the tapared end face of the main body acts on the spacer and press rings to cause the press rings to bite into the hose or tube to hold the same securely.

It is the object of the present invention to provide a joint for coupling a hose or tube with a transmission line for a high pressure fluid, the joint having the above features, wherein the press and spacer rings are prevented from dropping out of the socket when the socket is separated from the main body.

This object is achieved by the features set out in the patent claim.

The nature and utility of this invention will be more clearly apparent from the following detailed description with respect to preferred embodiments of the invention when read in conjunction with the accompanying drawings briefly described below:

Fig. 1 is a side view, partly broken, of a joint according to this invention;

Fig. 2 is an exploded view, partly broken, showing each element of the joint;

Fig. 3 is a sectional view showing a state wherein the rearmost press ring is engaged with a rear annular recess of a socket;

Fig. 4 is a side view, partly broken, showing a state wherein the joint is fastened;

Fig. 5 is a front elevational view of a press ring;

Fig. 6 is a side view, partly broken, of another embodiment of the joint;

Fig. 7 is a side view, partly broken, of still another embodiment of the joint.

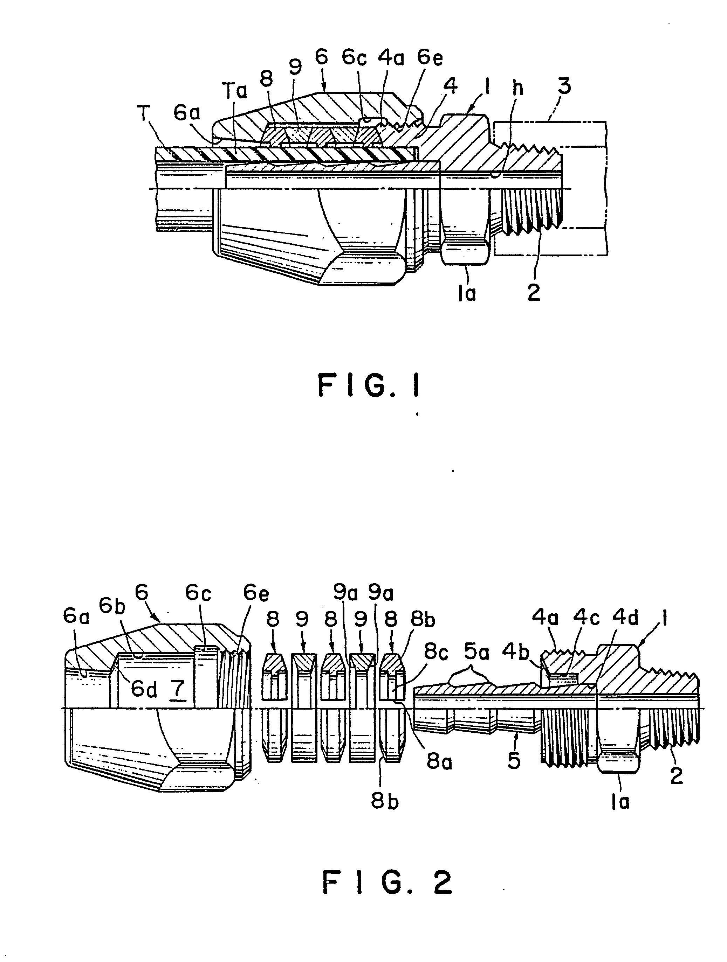

Figs. 1 to 4 show a first embodiment of this invention. In Figs. 1 and 2, a joint according to this invention has a hollow main body 1 in which a through hole h is provided. The main body 1 is formed with a hexagonal nut portion 1a at the center portion of the body 1 in its axial direction. A fastening tool is engaged with the nut portion 1a when the joint is fastened. On one side of the portion 1a is provided a connecting portion 2 having a male screw thread to be engaged with, for example, an outlet 3 for pressure oil of a machine, while the other side of the portion 1a is provided with a fastening portion 4 having a male screw thread 4a at its outer peripheral surface.

The distal end face 4b of the fastening portion 4 forms an inclined or tapered surface which is inclined toward the nut portion 1a. Inside of the fastening portion 4 are provided two middle and bottom recesses 4c and 4d in the form of steps and the bottom recess 4d supports fixedly the root portion of an insert cylinder 5. The root portion of the cylinder 5 is fixed to the bottom recess 4d by e.g. brazing or welding. The insert cylinder 5 has a plurality of projecting portions 5a, 5a, ..., 5a in the form of a wave in section at its outer peripheral surface at predetermined spacings. The projecting portions 5a bite the inner surface of a hose or tube T to be connected with the joint thereby to prevent leakage of fluid or prevent the hose or tube T from coming out of the joint. The projecting portions 5a may have other shapes. The insert cylinder 5 may be formed integrally with the fastening portion 4.

The male screw thread 4a of the fastening portion 4 is screw-engaged with the female screw thread 6e formed at the root portion of a fastening socket 6. The fastening socket 6 has three inner front, middle and rear annular surfaces 6a, 6b and 6c in a step manner. The middle surface 6b defines an accommodating space 7 in which three press rings 8 and two spacer rings 9 are disposed alternately.

At the border between the two adjacent surfaces 6a, 6b is formed an inclined annular surface 6d which is expanded toward the middle surface 6b from the front surface 6a. Further, on the opposite side of the annular surface 6d with respect to the middle surface 6b is provided the rear surface (recess) 6c whose diameter is slightly larger than that of the middle surface 6b. The rear surface 6c receives the rearmost press ring 8 that expands because of its elasticity when the fastening socket 6 is separated from the main body 1, thereby preventing other press rings 8 and the spacer rings 9 from dropping out of the accommodating space 7. The press rings 8 each have elasticity and are apt to expand when an outer force is released.

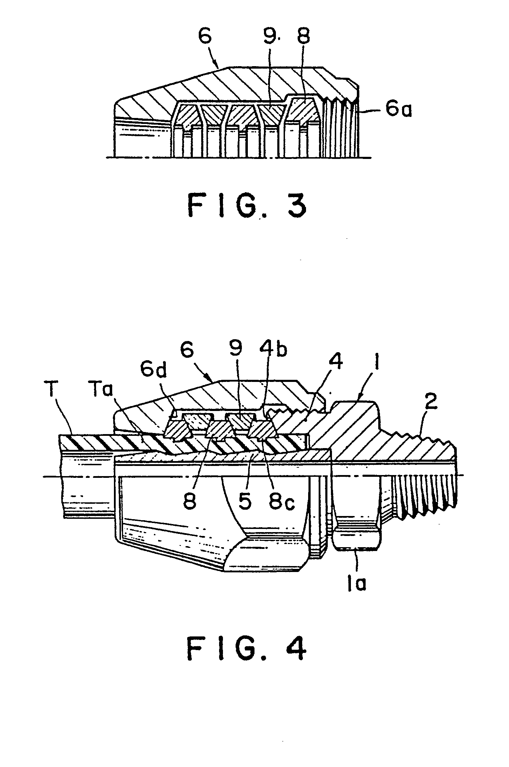

The joint is sold to users in a state wherein the socket 6 with the press and spacer rings 8, 9 therein is separated from the main body 1. At this time, the rear press ring 8 is received in the rear recess 6c of the socket to the rings 8, 9 from dropping out of the socket 6 as shown in Fig. 3.

A coaxial annular tapered opening 6a at the front portion of the socket 6 through which the hose or tube T extends outwardly is expanded gradually toward the front end of the joint, thereby to absorb expansion of the hose or tube T at its corresponding portion Ta in both cases when the joint is fastened as shown in Fig. 4 and also the fluid pressure is applied, moreover, to absorb displacement occurred by the vibration and bending of the hose or tube T during operation. Accordingly, the hose or tube T is reliably prevented from being broken at the portion Ta in these cases.

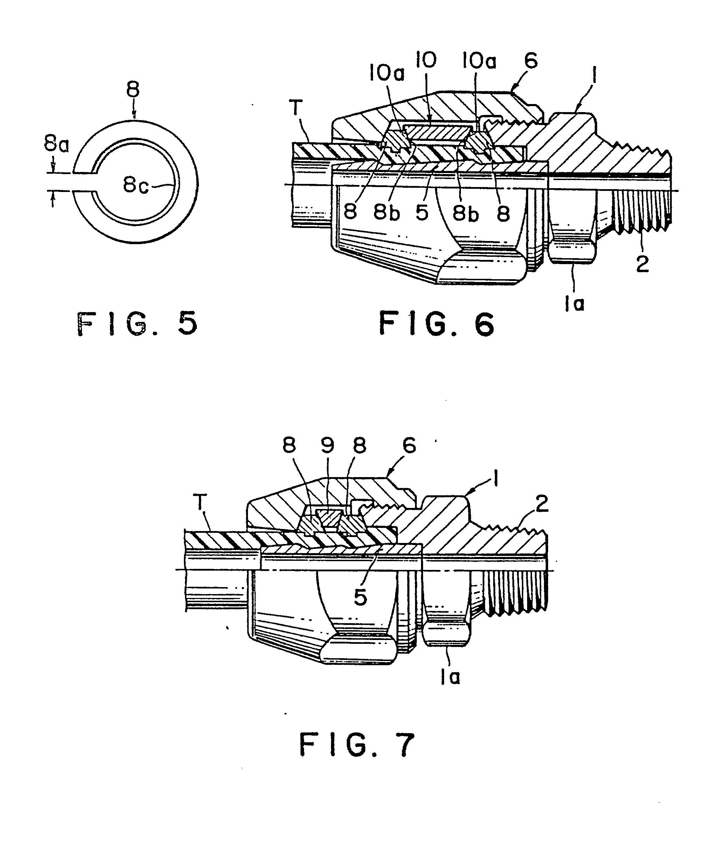

Each press ring 8 has a slot 8a for enabling the ring 8 to shrink inwardly. Further, each press ring 8 has a trapezoidal shape in cross section, with two tapered surfaces 8b, 8b, which are convergent in the radially outward direction and has an annular projection 8c on its inner surface for biting into the outer surface of the hose or tube T as shown in Figs. 2 and 5.

Each spacer ring 9 is located between the two adjoining press rings 8 and has an inverse trapezoidal shape, in cross section, provided with two inversely tapered surfaces 9a, 9a which are convergent in the radially inward direction and which are opposite to the tapered surfaces 8b, 8b, respectively.

When the hose or tube T is fastened by this joint, first the socket 6 is connected to the main body 1 while engaging the female screw thread 6e of the socket 6 with the male screw thread 4a of the main body 1. At this time, the press and spacer rings 8, 9 have already been accommodated in the accommodating spacer 7 in a state wherein the forward tapered surface 8b of the front press ring 8 contacts the tapered surface 6d of the socket 6, the backward surface 8b of the rearmost press ring 8 contacts the corresponding tapered surface 4b of the main body 1, and each of the other tapered surfaces 8b of the press rings 8 contacts the corresponding inversely tapered surface 9a of each spacer ring 9. Thereafter the hose or tube T is inserted into a space defined by the inner surfaces of the press and spacer rings 8, 9 and the outer peripheral surface of the insert cylinder 5 until the distal end of the hose or tube T is accommodated in the middle recess 4c of the main body 1 as shown in Fig. 1.

As the socket 6 is rotated, the distance between the tapered surface 6d of the socket 6 and the inversely tapered surface 4b of the main body 1 gradually decreases so that each tapered surface 8b of the press ring 8 slides radially inwardly along each corresponding surface. Accordingly, the annular projection 8c of each press ring 8 bites into the outer peripheral surface of the hose or tube T while, at the same time, the projecting portions 5a of the insert cylinder 5 bite into the inner surface of the hose or tube T as shown in Fig. 4. In this manner, the hose or tube T is tightly fastened between the inner surfaces of the press and spacer rings 8, 9 and the outer surface of the insert cylinder 5.

When the hose or tube T is released from the joint, the socket 6 is rotated in the reverse direction to allow each press ring 8 to expand because of its own elasticity.

Other embodiments of this invention will now be explained with reference to Figs. 6 and 7.

In Fig. 6, one spacer ring 10 which is wider than the spacer ring 9 in the first embodiment is used. The spacer ring 10 has two inclined surfaces 10a, 10a which cooperate with the corresponding inclined surfaces 8b, 8b of the two press rings 8 disposed on the opposite sides of the spacer ring 10, respectively. Further, in Fig. 7, one spacer ring 9 of the first embodiment is disposed between the two press rings 8, 8. In these two embodiments, as the number of the spacer rings is decreased as compared with the first embodiment, the force for fastening the hose or tube T is decreased. Therefore, these two embodiments are suitable for a joint for dealing with a medium or low hydraulic or fluid pressure, respectively.

In this invention, first, the socket 6 is engaged with the fastening portion 4 and thereafter the hose or tube T is inserted straight into a space between the inner surface of the socket 6 and the outer peripheral surface of the insert cylinder 5 without being rotated. Then, the socket 6 is rotated to shrink the press rings 8. Accordingly, a fastening step for the hose or tube T is very simple, nevertheless, a big force for fastening the hose or tube T is obtained. Furthermore, an assembly mandrel and a vice are not necessary for carrying out the fastening step. In addition, as the hose or tube T is inserted straight into the socket 6 without being rotated, the peripheral surface of the hose or tube T is not damaged.

## Claim

A joint for coupling a hose with a transmission line for high pressure fluid, comprising:

a) a main body (1) having a cylindrical fastening portion (4) whose outer peripheral surface is formed with a male screw thread (4a) and whose end face (4b) is so tapered as to converge as it extends radially inwardly;

b) a socket (6) having a female screw thread (6e) engaged with the male screw thread (4a) of the main body and a cylindrical internal accommodating space (7) extending coaxially with said female screw thread (6e) to terminate in an annular end face (6d) disposed axially opposite to, and tapered oppositely to said end face (4b) of the main body, said accommodating space (7) being open to the outside through an opening (6a) at the end of the socket remote from said female screw thread (6e);

c) an insert cylinder (5) fixed at one end thereof to said main body (1) and extending coaxially with said cylindrical fastening portion (4) within and beyond the same into said accommodating space (7) of the socket (6), which cylinder is to be inserted into the hose (T) to be coupled; and

d) press means (8, 9) disposed in the accommodating space (7) of the socket between the socket and the insert cylinder (5) for pressing and fastening the hose (T) fitted on ther insert cylinder (5) against the outer surface thereof, said press means comprising a plurality of axially arranged press rings (8) and at least one spacer ring (9 or 10) disposed between the two adjoining press rings, each of the press rings (8) having a substantially trapezoidal shape in cross section to form two tapered surfaces (8b) on its opposite sides and a slot (8a) for interrupting its circumference to enable the same to elastically deform radially inwardly, the spacer ring (9) having a trapezoidal shape in cross section, inverted relative so that of the press ring, said tapered end face (4b) of the main body (1) and the tapered surface (8b) of the press ring (8) adjoining the main body (1) matching in inclination, said annular face (6d) of the socket (6) and the tapered surface (8b) of the press ring (8) adjoining the annular face (6d) also matching in inclination:

characterized in that said socket (6) has internally an annular recess (6c) disposed between said female screw thread (6e) and the cylindrical surface defining said accommodating space (7), which recess (6c) has an outer diameter greater than the diameter of the cylindrical surface of said space (7), and that said press rings (8) have an elasticity to expand radially outwardly, and the press ring (8) adjoining the main body (1) is located radially inwardly of said annular recess (6c), whereby before the socket (6) is tightened against the main body (1), the press ring (8) adjoining the main body (1) can expand radially outwardly because of its elasticity into engagement with said annular recess (6c) to prevent the other press rings and the spacer ring from slipping out of the accommodating space (7).

**Patentanspruch**

Verbindung zum Anschließen eines Schlauches an eine Übertragungsleitung für unter Hochdruck stehende fließfähige Medien, mit

a) einem Hauptkörper (1) mit einem zylinderförmigen Befestigungsteil (4), dessen Außenumfangsfläche mit einem Außengewinde (4a) ausgebildet ist und dessen Stirnfläche (4b) derart trichterförmig verläuft, daß sie sich konvergierend in Radialrichtung nach innen erstreckt,

b) einer Fassung (6) mit einem Innengewinde (6e), das mit dem Außengewinde (4a) des Hauptkörpers in Eingriff steht, und mit einem zylinderförmigen inneren Aufnahmeraum (7), der sich koaxial mit dem Innengewinde (6e) erstreckt und an einer kreisringförmigen Stirnfläche (6d) endet, die entlang der Axialrichtung gegenüber der Stirnfläche (4b) angeordnet und in entgegengesetzter Weise zu dieser trichterförmig ausgebildet ist, wobei der Aufnahmeraum (7) über eine Öffnung (6a) an dem von dem Innengewinde (6e) entfernten Ende der Fassung nach außen offen ist,

c) einem Einsatzzylinder (5), der an seinem einen Ende an dem Hauptkörper (1) befestigt ist und sich koaxial mit dem zylinderförmigen Befestigungsteil (4) in diesem und über diesem hinaus in den Aufnahmeraum (7) der Fassung (6) hinein erstreckt, und der in den anzuschließenden Schlauch (T) einzusetzen ist, und

d) Anpreßeinrichtungen (8, 9), die zum Anpressen und Befestigen des auf dem Einsatzzylinder (5) aufgezogenen Schlauches (T) gegen die Außenoberfläche des Einsatzzylinders im Aufnahmeraum (7) der Fassung zwischen der Fassung und dem Einsatzzylinder (5) angeordnet sind, wobei die Anpreßeinrichtungen mehrere entlang der Axialrichtung angeordnete Anpreßringe (8) und mindestens einen zwischen den beiden benachbarten Anpreßringen vorgesehenen Abstandsring (9 oder 10) umfassen, von denen jeder Anpreßring einen im wesentlichen trapezförmigen Querschnitt zur Bildung von zwei abgeschrägten Flächen (8b) auf seinen einander entgegengesetzten Seiten und einen Schlitz (8a) zum Unterbrechen seines Umfangs aufweist, der eine elastische Deformation des Umfangs in Radialrichtung nach innen ermöglicht, und wobei der Abstandsring (9) einen trapezförmigen Querschnitt aufweist, der bezüglich des Querschnitts des Anpreßrings umgekehrt angeordnet ist, und wobei die konusförmige Stirnfläche (4b) des Hauptkörpers (1) und die abgeschrägte Fläche (8b) des an den Hauptkörper (1) anliegenden Preßrings (8) bezüglich ihrer Abschrägungen aneinander angepaßt sind, und wobei die kreisringförmige Fläche (8b) der Fassung (6) und die abgeschrägte Fläche (8b) des an die kreisringförmige Fläche (6d) anliegenden Anpreßrings (8) ebenfalls aneinander angepaßt sind,

dadurch gekennzeichnet, daß die Fassung (6) innen eine kreisringförmige Ausnehmung (6c) aufweist, die zwischen dem Innengewinde (6e) und der den Aufnahmeraum (7) begrenzenden zylinderförmigen Fläche angeordnet ist, wobei die Ausnehmung (6c) einen Außendurchmesser aufweist, der größer als der Durchmesser der zylinderförmigen Fläche des Raums (7) ist, und daß die Anpreßringe (8) eine Elastizität aufweisen, die deren Ausdehnung in Radialrichtung nach innen ermöglicht, und der am Hauptkörper (1) anliegende Anpreßring (8) sich in Radialrichtung innerhalb der kreisringförmigen Ausnehmung (6c) befindet, wodurch vor dem Festziehen der Fassung (6) gegen den Hauptkörper (1) der am Hauptkörper (1) anliegende Anpreßring (8) zum Verhindern eines Hinausgleitens der anderen Anpreßringe und des Abstandsringes aus dem Aufnahmeraum sich aufgrund seiner Elastizität in Radialrichtung nach außen ausdehnen und in Eingriff mit der kreisringförmigen Ausnehmung (6c) kommen kann.

**Revendication**

Dispositif de jonction pour relier un tuyau flexible à une conduite de transmission pour fluide à haute pression, comprenant:

a) un corps principal (1) présentant une partie cylindrique de fixation (4) dont la surface périphérique externe comporte un filet extérieur (4a) et dont la face d'extrémité (4b) est fuselée de manière à converger pour s'étendre radialement à l'intérieur;

b) un manchon (6) présentant un filet intérieur (6e) qui s'engage avec le filet extérieur (4a) du corps principal (1) et un espace de logement (7) interne cylindrique qui s'étend de façon coaxiale avec ledit filet intérieur (6e), et se termine en une face d'extrémité annulaire (6d) disposée axialement et de façon opposée à ladite face d'extrémité (4b) du corps principal, et fuselée inversement à celle-ci, ledit espace de logement (7) étant ouvert vers l'extérieur au moyen d'une ouverture (6a) située à l'extrémité du manchon, à l'opposé dudit filet intérieur (6e);

c) un cylindre d'insertion (5) fixé à une extrémité dudit corps principal (1) et s'étendant, coaxialement à ladite partie cylindrique de fixation (4), à l'intérieur de celle-ci et, de l'autre côté, dans ledit espace de logement (7) du manchon (6) dont le cylindre est destiné à être introduit dans le tuyau flexible (T) à raccorder;

d) des moyens de compression (8, 9) disposés dans l'espace de logement (7) du manchon entre le manchon et le cylindre d'insertion (5) pour compresser et fixer le tuyau flexible (T) disposé sur le cylindre d'insertion (5) contre sa surface extérieure, lesdits moyens de compression comportant une multitude d'anneaux de compression (8) disposés axialement et au moins un anneau d'espacement (9 ou 10) disposé entre les deux anneaux de compression voisins, chacun des anneaux de compression (8) présentant une forme substantiellement trapézoïdale en coupe transversale pour former deux surfaces fuselées (8b) sur ses côtés opposés et une fente (8a) produisant une rupture de sa circonférence pour lui permettre de se déformer élastiquement radialement à l'intérieur, l'anneau d'espacement (9) ayant en coupe transversale une forme trapézoïdale inversée par rapport à celle de l'anneau de compression, ladite face d'extrémité fuselée (4b) du corps principal (1) et la face fuselée (8b) de l'anneau de compression (8) contigu au corps principal (1) étant inclinée de pair, ladite face annulaire (6d) du manchon (6) et la surface fuselée (8b) de l'anneau de compression (8) contigu à la face annulaire (6d) étant également inclinées de pair,

caractérisé en ce que ledit manchon (6) présente, à l'intérieur, un renfoncement annulaire (6c) disposé entre ledit filet intérieur (6e) et la surface cylindrique définissant ledit espace de logement (7), lequel renfoncement (6c) présente un diamètre externe plus grand que le diamètre de la surface cylindrique dudit espace (7), et en ce que lesdits anneaux de compression (8) présentent une élasticité pour se dilater radialement vers l'extérieur, et l'anneau de compression (8) contigu au corps principal (1) est logé radialement à l'intérieur dudit renfoncement annulaire (6c) par lequel, avant que le manchon (6) soit fixé au corps principal (1), l'anneau de compression (8) contigu au corps principal (1) peut se dilater radialement vers l'extérieur, du fait de son élasticité, en s'engageant dans ledit renfoncement annulaire (6c) pour empêcher les autres anneaux de compression et l'anneau d'écartement de glisser hors de l'espace de logement (7).

FIG. 1

FIG. 2

F I G. 3

F I G. 4

EP 0 241 656 B1

FIG. 5

FIG. 6

FIG. 7